# EUROPEAN PATENT SPECIFICATION

(11) **EP 2 354 662 B1**
(45) Date of publication and mention of the grant of the patent: **26.04.2017**
(21) Application number: 10197322.0
(22) Date of filing: 29.12.2010
(51) Int. Cl.: F23R 3/34

(54) **Burner assembly for a gas turbine plant and a gas turbine plant comprising said burner assembly**
Gasturbinenbrenner und Gasturbine mit einem solchen Brenner
Brûleur pour turbine à gaz et turbine à gaz avec un tel brûleur

(30) Priority: 29.12.2009 IT MI20092321
(43) Date of publication of application: 10.08.2011
(73) Proprietor: Ansaldo Energia S.p.A., Genova (IT)
(72) Inventor: Mori, Giulio, 17100 Savona (IT); Rizzo, Sergio, 16128 Genova (IT); Bonzani, Federico, 16156 Genova (IT)
(74) Representative: Bergadano, Mirko

(56) References cited:
- EP-A1- 2 107 313
- US-A- 5 623 819
- US-A1- 2006 080 968

## Description

The present invention relates to a burner assembly for a gas turbine plant and to a gas turbine plant comprising said burner assembly.

The ever increasing need to reduce the environment impact of power plants has addressed the high-power gas turbine field towards the use of so-called "lean premix" technology combustion chambers. Such a technology substantially includes an annular combustion chamber comprising a plurality of equally spaced burner assemblies, each of which comprises a premix burner and a pilot burner. The premix burner is supplied with an air-fuel mixture, with high excess of air, in order to cause a flame such as to ensure a uniform temperature range and avoid possible temperature peaks which could lead to high NOx emissions at the exhaust.

The pilot burner is supplied with fuel and air, and stabilizes the flame produced by the premix burner.

However, this type of combustion chambers is affected by thermo-acoustic instability phenomena, commonly known as "humming", which are determined by the fluctuation of the parameters of the fluid within the combustion chamber. These thermo-acoustic instability phenomena are dangerous for the structure of the combustion chamber itself.

Furthermore, the pilot burner is not supplied with air in excess and is therefore responsible for most NOx emissions of the burner assembly.

Documents DE 19757617, EP 1277920, EP 0193838 and EP 1649219 describe combustion chambers having burners of this type, while in documents US 5623819, US 2006/080968 and EP2107313 arrangements for reducing NOx emissions in combustion chambers are disclosed. US2006/080968 discloses a burner assembly according to the preamble of claim 1.

It is an object of the present invention to provide a burner assembly which is free from the drawbacks of the prior art. In particular, it is an object of the present invention to provide a burner assembly characterized by a lower NOx emission level than that of burner assemblies of the prior art.

In accordance with these objects, the present invention relates to a burner assembly in accordance with claim 1.

It is a further object of the invention to provide a gas turbine plant for the production of electric power characterized by lower NOx emissions than those of the plants of the prior art.

In accordance with such objects, the present invention relates to a gas turbine plant for the production of energy in accordance with claim 9.

Further features and advantages of the present invention will be apparent from the following description of a non-limitative embodiment thereof, with reference to the figures in the appended drawings, in which:
- figure 1 is a diagrammatic view of a gas turbine plant for the production of electric power according to the present invention;

- figure 2 is a section view, with parts removed for clarity, of a burner assembly according to a first embodiment;
- figure 3 is a section view, with parts removed for clarity, of a burner assembly according to a second embodiment;
- figure 4 is a section view, with parts removed for clarity, of a burner assembly according to a third embodiment;
- figure 5 is a section view, with parts removed for clarity, of a burner assembly according to a fourth embodiment;
- figure 6 is a section view, with parts removed for clarity, of a burner assembly according to a fifth embodiment.

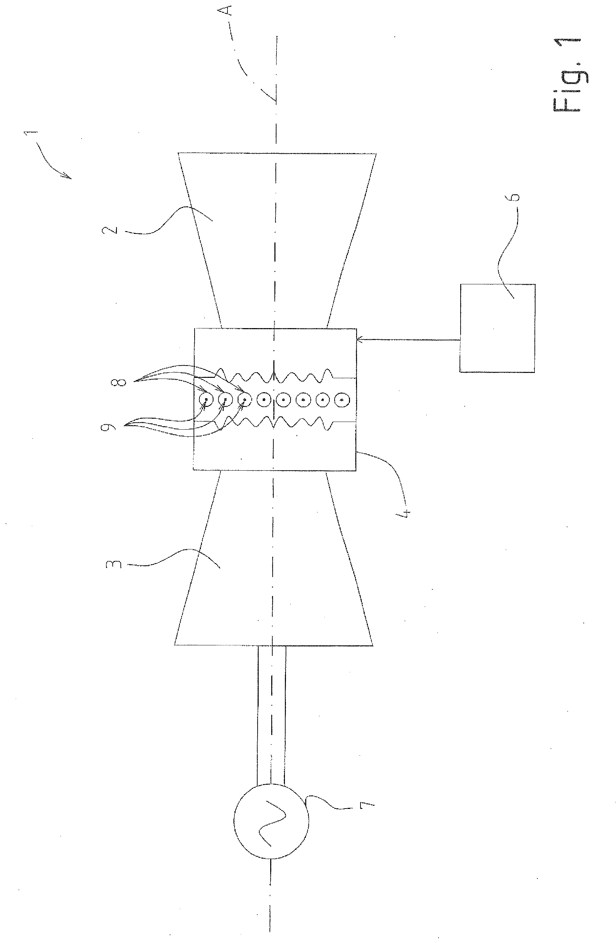

In figure 1, numeral 1 indicates a plant for the production of electric power comprising a gas turbine 2, which extends along an axis A, a compressor 3, a combustion chamber 4, an assembly 6 for supplying fuel to the combustion chamber 4 and a generator 7, which transforms mechanical power provided by the gas turbine 2 into output electric power.

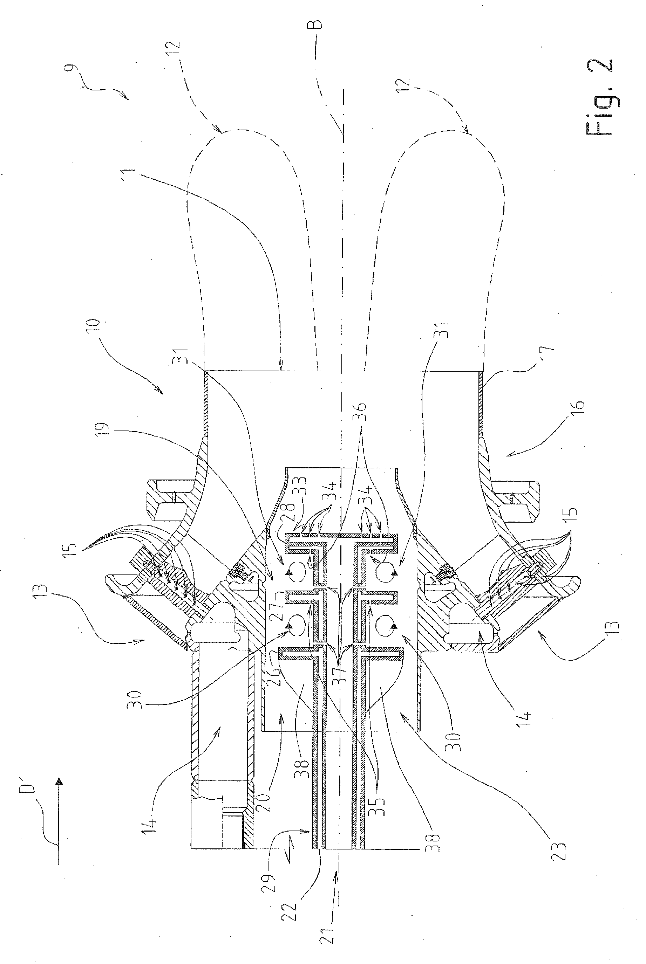

The combustion chamber 4 is of the annular type and comprises a plurality of seats 8, each of which is adapted to be engaged by a burner assembly 9 (shown in greater detail in figures 2-6). Seats 8 are arranged along a circular path close to a peripheral edge of combustion chamber 4. There are twenty-four seats 8 and burner assemblies 9 in the non-limitative example shown herein.

With reference to figure 2, each burner assembly 9 extends along an axis B and comprises a main burner 10 and an auxiliary burner 11. The auxiliary burner 11 substantially extends along axis B, while the main burner 10 extends about the auxiliary burner 11 parallel to axis B.

Main burner 10 is configured to supply an air-fuel mixture and to define a main combustion zone 12 (diagrammatically indicated by a dashed line in the figure).

Air and fuel are supplied along a supplying direction D1 directed towards the inside of combustion chamber 4.

In particular, main burner 10 comprises an annular air supply pipe 13 and an annular fuel supply pipe 14.

The annular air supply pipe 13 receives air from compressor 3 and has a radial height decreasing in the supplying direction D1 so as to define a pipe having a substantially frustoconical shape.

The annular fuel supply pipe 14 extends parallel to axis B and ends with a plurality of nozzles 15, which directly face the annular air supply pipe 13. In particular, the nozzles 15 are organized in groups of nozzles aligned and inclined with respect to axis B. The groups of nozzles 15 preferably comprise four or five nozzles.

At an end portion 16, the annular air supply pipe 13 is provided with a cylindrical outlet element 17, commonly named "Cylindrical Burner Outlet", which extends parallel to axis B.

The main combustion zone 12, in which the combustion of the air-fuel mixture from the annular air supply pipe 13 occurs, extends close to the end portion 16 of the annular air supply pipe 13 and to the cylindrical outlet element 12.

Auxiliary burner 11 is designed to cause a combustion process in an auxiliary combustion zone 19 and to supply the main combustion zone 12 with fumes produced by the combustion process in the auxiliary combustion zone 19.

In particular, auxiliary burner 11 is designed to cause a combustion process of the flameless type in the auxiliary combustion zone 19.

Flameless combustion process means a combustion process obtained by preheating the combustion air and recirculating burnt gases. The air preheating conditions are obtained by recirculating the fumes. Thereby, indeed, the heat is transferred from the products to the reactants and the comburent is diluted with fuel and combustion products.

Due to these conditions, a homogeneous combustion reaction may be developed within an auxiliary combustion zone, not being concentrated on a flame front. This determines a homogenous temperature in the auxiliary combustion zone, which in turn results in a reduction of the temperature peaks responsible for the formation of nitrogen oxides (NOx) of thermal origin.

The definition of "flameless" derives from the absence of a defined, visible flame during the combustion reaction.

Various embodiments of the burner assembly will be described below, each of which has a different auxiliary burner shape. These embodiments are described by way of mere non-limitative example. In fact, there are further embodiments of the auxiliary burner adapted to cause a flameless combustion process in an auxiliary combustion zone and to supply the main combustion zone 12 with the fumes produced by the combustion process in the auxiliary combustion zone.

According to the first embodiment, burner assembly 9 comprises an auxiliary burner 11 provided with a primary channel 20 for supplying air, a secondary channel 21 for supplying air, a fuel supplying channel 22 and a flow guiding device 23.

The primary channel 20 and the secondary channel 21 are supplied with air from compressor 3. The fuel supplying channel 22 is preferably supplied with gas.

The secondary channel 21 substantially extends along axis B, the fuel supplying channel 22 extends about the secondary channel 21 parallel to axis B, while the primary channel 20 extends about the fuel supplying channel 22 parallel to axis B.

The flow guiding device 23 is arranged along the primary channel 20 substantially at the auxiliary combustion zone 19 and is designed to produce at least one localized recirculation of combustion fumes in the auxiliary combustion zone 19.

In particular, the flow guiding device 23 comprises a first partition 26, a second partition 27 and a third partition 28, which are arranged along the primary pipe 20 and projects from the outer wall 29 of the fuel supplying channel 22 in a direction substantially perpendicular to axis B. First partition 26, second partition 27 and third partition 28 are arranged in sequence at a given distance from one another along the supplying direction D1, so as to define, along with the outer wall 29 of the fuel supplying channel 22, a first recirculation area 30 (as shown by the arrows in figure 2) of the auxiliary combustion zone 19 between the first partition 26 and the second partition 27, and a second recirculation area 31 (as shown by the arrows in figure 2) in the auxiliary combustion zone 19 between second partition 27 and third partition 28. The first recirculation area 30 and the second recirculation area 31 are open and communicate with the primary channel 20.

First partition 26, second partition 27 and third partition 28 are hollow and fluidically connected to the fuel supplying channel 22. In particular, the third partition 28 is also fluidically connected to the secondary channel 21 and has a substantially circular bottom face 33, which is provided with outlet holes 34 for the air from the secondary channel 21.

Second partition 27 and third partition 28 are provided with respective fuel inlet ports 35 and 36, which face the first recirculation area 30 and the second recirculation area 31 of the auxiliary combustion zone 19, respectively.

The outer wall 29 of the fuel supplying channel 22 is provided with at least two air inlet ports 37 communicating with the secondary channel 21 and adapted to supply air to the first recirculation area 30 and to the second recirculation area 31, respectively.

The flow guiding device 23 is preferably provided with a baffle 38 arranged upstream of the first partition 26 along the supplying direction D1. The flow guiding device 23 is shaped so as to convey the air flow flowing along the primary channel 20 towards the first recirculation area 30 and the second recirculation area 31.

In essence, the air from the primary channel 20, the air from the secondary channel 21 and the fuel from the fuel supplying channel 22 flow into the first recirculation area 30 and into the second recirculation area 31.

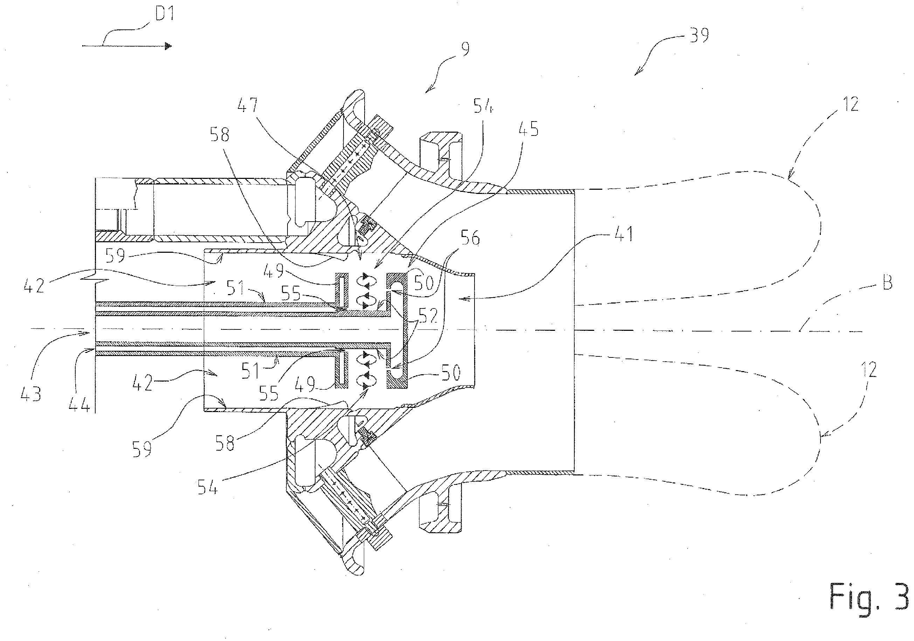

Figure 3 shows a second embodiment of a burner assembly 39 in which the same reference numbers are used to describe parts similar to those of the burner assembly 9 in figure 2.

According to such an embodiment, burner assembly 39 comprises an auxiliary burner 41 provided with a primary channel 42 for supplying air, a secondary channel 43 for supplying air, a fuel supplying channel 44 and a flow guiding device 45. Primary channel 42 and secondary channel 43 are supplied with air from compressor 3. The fuel supplying channel 44 is preferably supplied with gas.

The secondary channel 43 substantially extends along axis B, the fuel supplying channel 44 extends about the secondary channel 43 parallel to axis B, while the primary channel 42 extends about the fuel supplying channel 44 parallel to axis B.

The flow guiding device 45 is arranged along the primary channel 42, substantially at an auxiliary combustion zone 47 and is designed to produce at least one localized recirculation of combustion fumes in the auxiliary combustion zone 47.

In particular, the flow guiding device 45 comprises a first partition 49 and a second partition 50 arranged along the primary channel 42. First partition 49 projects from the outer wall 51 of the fuel supplying channel 44 in a direction substantially orthogonal to axis B, second partition 50 projects from the outer wall 51 of the secondary channel 43 in a direction substantially orthogonal to axis B. First partition 49 and second partition 50 are arranged in sequence at a given distance from each other along the supplying direction D1 so as to define, along with the outer wall 52 of the secondary channel 43, a circulation area 54 (as shown by the arrows in figure 3) of the auxiliary combustion zone 47 between first partition 49 and second partition 50.

First partition 49 and second partition 50 are hollow and fluidically connected to the secondary channel 43. Furthermore, first partition 49 has at least one fuel inlet port 55 fluidically connected to the fuel supplying channel 44, while the second partition 50 has at least one air inlet port 56 for supplying the recirculation area 54 with the air flowing into the secondary channel 43

Air inlet port 56 and fuel inlet port 55 are arranged so as to produce a double recirculation of the combustion fumes in the circulation area 54 (as shown by the arrows in figure 3).

The flow guiding device 45 is preferably provided with a baffle 58 arranged substantially facing the first partition 49 in contact with the inner face 59 of the primary channel 42 and shaped so as to convey the air flow flowing along the primary channel 42 towards the auxiliary combustion zone 47.

In essence, the air from the primary channel 42, the air from the secondary channel 43 and the fuel from the fuel supplying channel 44 flow into the auxiliary recirculation area 47.

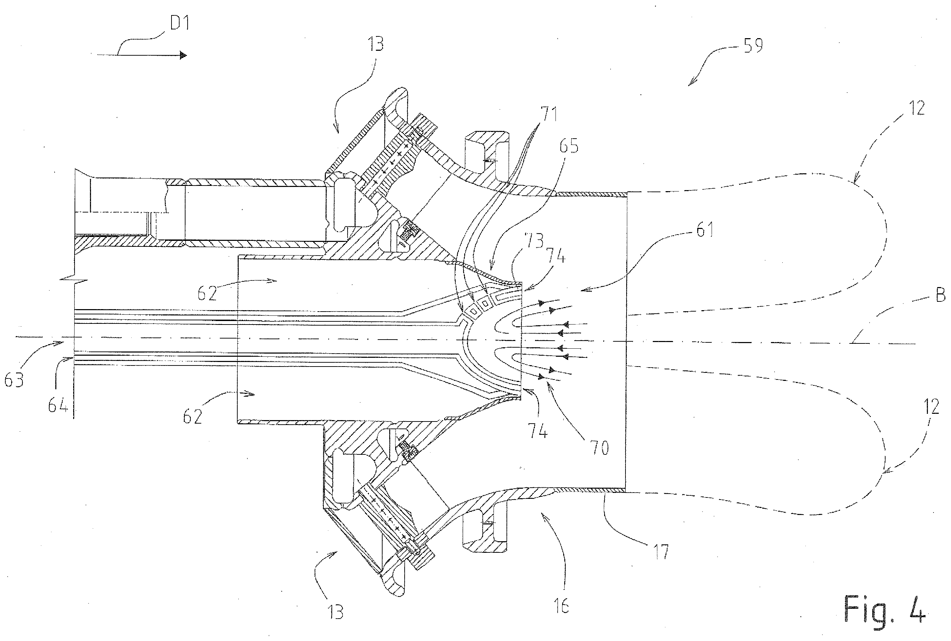

Figure 4 shows a third embodiment of a burner assembly 59 in which the same reference numbers are used to describe parts similar to those of the burner assembly 9 in figure 2.

According to the such an embodiment, burner assembly 59 comprises an auxiliary burner 61 provided with a primary channel 62 for supplying air, a secondary channel 63 for supplying air, a fuel supplying channel 64 and a flow guiding device 65. Primary channel 62 and secondary channel 63 are supplied with air from compressor 3. The fuel supplying channel 64 is preferably supplied with gas.

The secondary channel 63 substantially extends along axis B, the fuel supplying channel 64 extends about the secondary channel 63 parallel to axis B, while the primary channel 62 extends about the fuel supplying channel 64 parallel to axis B.

The secondary channel 63 and the fuel supplying channel 64 are shaped so as to define the flow guiding device 65.

In the embodiment described and illustrated herein, the flow guiding device 65 is a cup-shaped element, preferably having a paraboloid shape, arranged substantially along axis B at the end portion 16 of the annular air supply pipe 13. The cup-shaped element 65 defines the auxiliary combustion zone 69 in which a recirculation area 70 of the combustion fumes produced in the main combustion zone 12 and of the combustion fumes produced in the auxiliary combustion zone 69 is generated, due to the shape of the cup-shaped element 65 and to the proximity to the main combustion zone 12 (as shown by the arrows in figure 4).

The cup-shaped element 65 is provided with at least one fuel inlet port 71 directly connected to the fuel supplying channel 64. The cup-shaped element 65 is preferably provided with a plurality of fuel inlet ports 71, which are calibrated and arranged so as to determine a sufficient penetration of fuel in the recirculation area 70. Thereby, the fuel may be adequately mixed to the fumes in the recirculation area 70 before the combustion reaction occurs.

The wall 73 defining the cup-shaped element 65 is hollow and cooled with the air flowing in the secondary pipe 63. Wall 73 is open at the outer edge of the cup-shaped element so as to define air inlet ports 74. The air inlet ports 74 supply the recirculation area 70 with the air from the secondary channel 63.

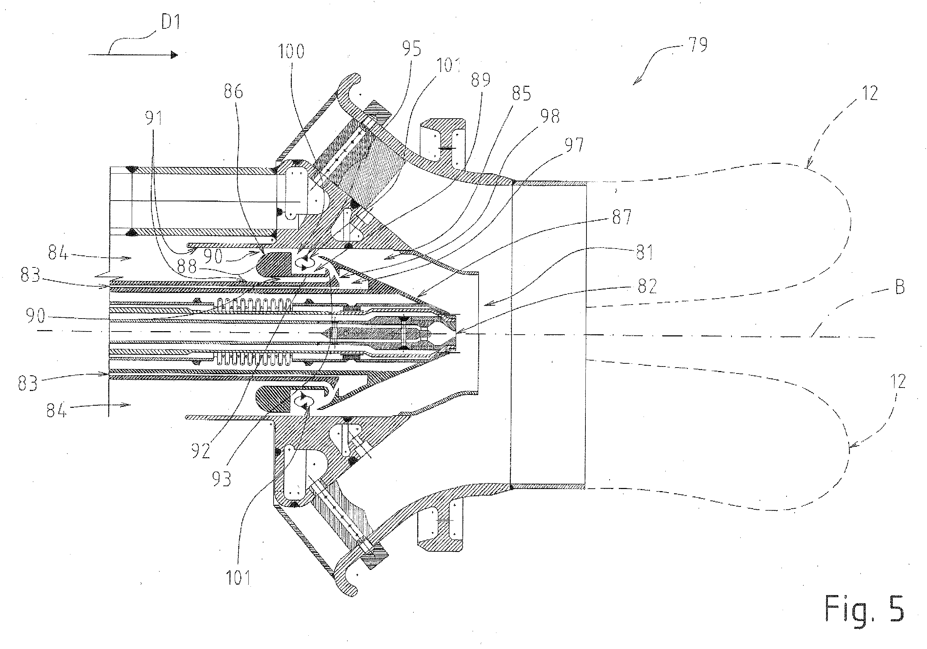

Figure 5 shows a fourth embodiment of a burner assembly 79 in which the same reference numbers are used to describe parts similar to those of the burner assembly 9 in figure 2.

According to such an embodiment, burner assembly 79 comprises an auxiliary burner 81 provided with a central nozzle 82 for supplying diesel fuel and arranged along axis B, a fuel (preferably gas) supplying channel 83, which extends about the central nozzle 82 parallel to axis B, and a primary channel 84 for supplying air, which extends about the fuel supplying channel 83 parallel to axis B and a flow guiding device 85.

The air flowing in the secondary channel 84 comes from compressor 3. The fuel flowing in the fuel supplying channel 83 is preferably gas.

The flow guiding device 85 is arranged along the primary channel 84 and comprises an air flow deflecting element 86 and a fuel flow channeling element 87. In detail, the air flow deflecting element 86 is annular and comprises a rear portion 88 on which the air flow strikes and a front portion 89.

The rear portion 88 is shaped so as to convey the air flow into two fast flow channels 90, which are defined by the walls 91 of the primary channel 84 and by the rear portion 88. The front portion 89 is defined by an annular tongue 92, which extends parallel to axis B and has an end edge 93, which extends substantially orthogonal to axis B. The end edge 93, the annular tongue 92 and the rear portion 88 define an annular seat 95.

The fuel flow conveying element 87 comprises a substantially frustoconical element, which extends about the fuel supplying channel 83 and is shaped so as to define a fuel outlet chamber 97, and a fuel conveying channel 98 to convey the fuel from the outlet chamber 97 to the annular seat 95.

Deflecting element 86, conveying element 87 and walls 91 of the primary channel 84 define the auxiliary combustion zone 100. In particular, the shape of deflecting element 86 and conveying element 87 determines a fume circulation area 101 substantially at the annular seat 95 (as shown by the arrows in figure 5).

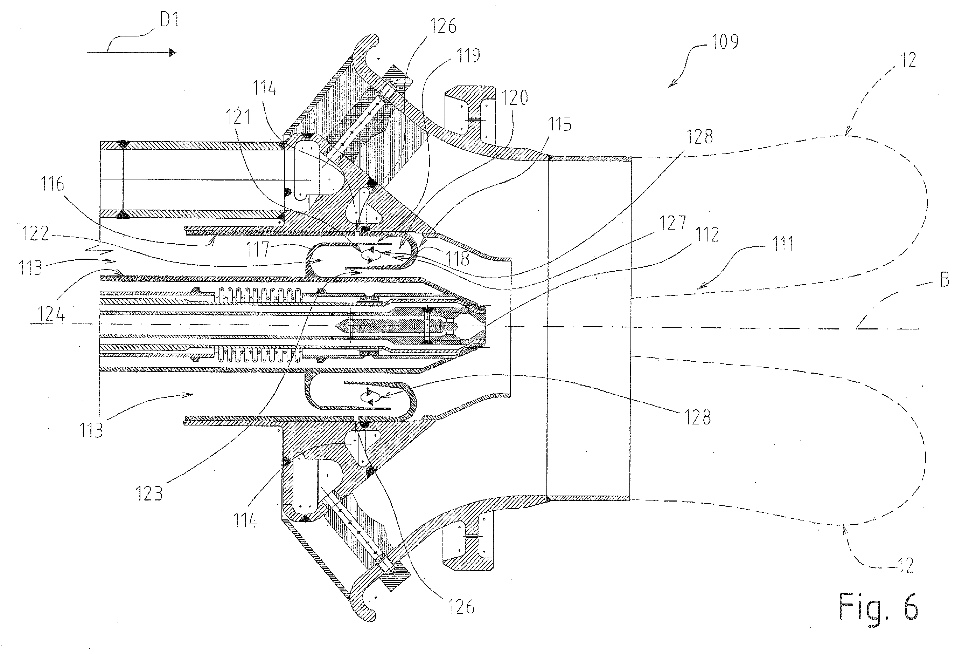

Figure 6 shows a fifth embodiment of a burner assembly 109 in which the same reference numbers are used to describe parts similar to those of the burner assembly 9 in figure 2.

According to such an embodiment, burner assembly 109 comprises an auxiliary burner 111 provided with a central nozzle 112 for supplying diesel fuel and arranged along axis B, an air supplying channel 113, which extends about the central nozzle 112 parallel to axis B, a fuel supplying channel 114, which substantially extends about the primary channel 113 parallel to axis B (only partially seen in figure 6), and a flow guiding device 115.

The air flowing in the secondary channel 113 comes from compressor 3. The fuel flowing in the fuel supplying channel 114 is preferably gas.

The flow guiding device 115 is arranged along the primary channel 113 and comprises a first baffle 117 and a second baffle 118 having a substantially C-shaped section.

In particular, first baffle 117 and second baffle 118 are arranged with respect to each other so as to form a flow path comprising in sequence a first axial segment 119, defined by the first baffle 117 and by an inner wall 116 of the primary channel 113, a first radial segment 120, a second axial segment 121 defined by the first and second baffles 117,118, a second radial segment 122 and a third axial segment 123 defined by the second baffle 118 and by the other inner wall 124 of the primary channel 113.

The flow guiding device 115 comprises a fuel inlet port 126 made in the wall 116 of the primary channel 113, which faces along the first axial segment 119 of the flow path.

The first and second baffles 117,118 are shaped to define an auxiliary combustion zone 127 at the second axial segment 121 of the flow path. In particular, the shape of the first and second baffles 117,118 causes the generation of a fume recirculation area 128 (as shown by the arrows in figure 6) substantially at the second axial segment 121 of the flow path.

The auxiliary burner 11, 41, 61, 81, 111 described and illustrated herein may be advantageously installed on most burner assemblies of the prior art to replace the pilot burner.

Furthermore, the burner assembly 9, 39, 59, 79, 109 according to the present invention is characterized by a lower level of NOx emissions as compared to the emission levels of the burner assemblies of the prior art.

The burner assembly 9, 39, 59, 79, 109 according to the present invention further indicates lower thermo-acoustic instability phenomena as compared to those of the burner assemblies of the prior art.

It is finally apparent that changes and variations may be made to the burner assembly 9, 39, 59, 79, 109 and to the plant 1 described herein without departing from the scope of the appended claims.

## Claims

1. Burner assembly for a gas turbine plant, the burner assembly (9; 39; 59; 79; 109) extending along a longitudinal axis (B) and comprising:
a main burner (10) configured to supply an air-fuel mixture and to define a main combustion zone (12);
an auxiliary burner (11; 41; 61; 81; 111) configured to cause a flameless combustion process in an auxiliary combustion zone (19; 47; 69; 100; 127) and to supply the main combustion zone (12) with fumes produced by the flameless combustion process in the auxiliary combustion zone (19; 47; 69; 100; 127); wherein the auxiliary combustion zone (19; 47; 69; 100; 127) is arranged upstream the main combustion zone (12) along an air supplying direction (D1);
the burner assembly being **characterized by** the fact that the auxiliary burner (11; 41; 61; 81; 111) comprises a flow guiding device (23; 45; 65; 85; 115) configured to cause at least a recirculation area (30, 31; 54; 70; 101; 128) of the fumes produced by the flameless combustion process in the auxiliary combustion zone (19; 47; 69; 100; 127).

2. Burner assembly according to claim 1, wherein the flow guiding device (23; 45; 65; 85; 115) is provided with at least an air inlet port (37; 56; 74; 90; 119) and at least a fuel inlet port (35, 36; 55; 71; 85; 126).

3. Burner assembly according to anyone of the foregoing Claims, wherein the auxiliary burner (11; 41; 61; 81; 111) comprises a primary channel (20; 42; 62; 84; 113) for supplying air and a fuel supplying channel (22; 44; 64; 83; 114).

4. Burner assembly according to claim 3, wherein the auxiliary burner (11; 41; 61) comprises a secondary channel (21;43;63) for supplying air.

5. Burner assembly according to any one of the foregoing claims, wherein the flow guiding device (23; 45) comprises at least a first partition (26, 27; 49) and a second partition (27, 28; 50), which extend transversely to the axis (B); the first partition (26, 27; 49) and the second partition (27, 28; 50) defining at least a recirculation area (30, 31; 54) of the auxiliary combustion zone (19; 47).

6. Burner assembly according to any one of the foregoing claims, wherein the flow guiding device (115) comprises a first baffle (117) and a second baffle (118) having a C-shaped section; the first baffle (117) and the second baffle (118) being arranged with respect to one another so as to form a flow path comprising, in order, a first axial section (119), a first radial section (120), a second axial section (121), a second radial section (122) and a third axial section (123); the flow path comprising a recirculation area (128) of the auxiliary combustion zone (127).

7. Burner assembly according to any one of the foregoing claims, wherein the flow guiding device (65) comprises a cup-shaped element arranged substantially along the axis (B), which defines a recirculation area (70) of the fumes produced by the combustion in the main combustion zone (12) and the fumes produced by the flameless combustion process in the auxiliary combustion zone (69).

8. Burner assembly according to any one of the foregoing claims, wherein the flow guiding device (85) comprises a deflecting element (86) for deflecting the air flow and a conveying element (87) for conveying the fuel flow; the deflecting element (86) and the conveying element (87) being shaped in such a way to define a recirculation area (101) of the auxiliary combustion zone (100).

9. Gas turbine electric power plant comprising at least a burner assembly (9; 39; 59; 79; 109) according to anyone of the foregoing claims.

## Patentansprüche

1. Eine Brennerbaugruppe für eine Gasturbinenanlage, wobei sich die Brennerbaugruppe (9; 39; 59; 79; 109) entlang einer Längsachse (B) erstreckt, umfassend:
einen Hauptbrenner (10), der so ausgestaltet ist, dass dieser ein Luft-BrennstoffGemisch zuführt und eine Hauptverbrennungszone (12) definiert,
einen Hilfsbrenner (11; 41; 61; 81; 111), der so ausgestaltet ist, dass er einen flammenlosen Verbrennungsvorgang in einer Hilfs-Verbrennungszone (19; 47; 69; 100; 127) verursacht und der Hauptverbrennungszone (12) Gase zuführt, die durch den flammenlosen Verbrennungsvorgang in der Hilfs-Verbrennungszone (19; 47; 69; 100; 127) erzeugt wurden, wobei sich die Hilfs-Verbrennungszone (19; 47; 69; 100; 127) entlang einer Luftzuführungsrichtung (D1) stromaufwärts der Hauptverbrennungszone (12) befindet,
wobei die Brennerbaugruppe **dadurch gekennzeichnet ist, dass** der Hilfsbrenner (11; 41; 61; 81; 111) eine Strömungsleitvorrichtung (23; 45; 65; 85; 115) umfasst, die so ausgestaltet ist, dass sie zumindest einen Rezirkulationsbereich (30; 31; 54; 70; 101; 128) für die durch den flammenlosen Verbrennungsvorgang in der Hilfs-Verbrennungszone (19; 47; 69; 100; 127) erzeugten Gase bildet.

2. Brennerbaugruppe nach Anspruch 1, wobei die Strömungsleitvorrichtung (23; 45; 65; 85; 115) mit zumindest einer Lufteinlassöffnung (37; 56; 74; 90; 119) und zumindest einer Brennstoffeinlassöffnung (35; 36; 55; 71; 85; 126) bereitgestellt ist.

3. Brennerbaugruppe nach einem der vorhergehenden Ansprüche, wobei der Hilfsbrenner (11; 41; 61; 81; 111) einen ersten Kanal (20; 42; 62; 84; 113) zum Zuführen von Luft und einen Zuführkanal (22; 44; 64; 83; 114) für Brennstoff umfasst.

4. Brennerbaugruppe nach Anspruch 3, wobei der Hilfsbrenner (11; 41; 61) einen zweiten Kanal (21; 43; 63) zum Zuführen von Luft umfasst.

5. Brennerbaugruppe nach einem der vorhergehenden Ansprüche, wobei die Strömungsleitvorrichtung (23; 45) wenigstens einen ersten Teilbereich (26; 27; 49) und einen zweiten Teilbereich (27; 28; 50) umfasst, welche sich quer zu der Achse (B) erstrecken, wobei der erste Teilbereich (26; 27; 49) und der zweite Teilbereich (27; 28; 50) zumindest einen Rezirkulationsbereich (30; 31; 54) der Hilfs-Verbrennungszone (19; 47) definieren.

6. Brennerbaugruppe nach einem der vorhergehenden Ansprüche, wobei die Strömungsleitvorrichtung (115) ein erstes Leitblech (117) und ein zweites Leitblech (118) mit einem C-förmigen Bereich umfasst, wobei das erste Leitblech (117) und das zweite Leitblech (118) zueinander so angeordnet sind, dass sie einen Strömungsweg bilden, der nacheinander einen ersten axialen Abschnitt (119), einen ersten radialen Abschnitt (120), einen zweiten axialen Abschnitt (121), einen zweiten radialen Abschnitt (122) und einen dritten axialen Abschnitt (123) umfasst, wobei der Strömungsweg einen Rezirkulationsbereich (128) der Hilfs-Verbrennungszone (127) umfasst.

7. Brennerbaugruppe nach einem der vorhergehenden Ansprüche, wobei die Strömungsleitvorrichtung (65) ein im Wesentlichen entlang der Achse (B) angeordnetes tassenförmiges Element umfasst, , welches einen Rezirkulationsbereich (70) für die durch die Verbrennung in der Hauptverbrennungszone (12) erzeugten Gase und für die durch den flammenlosen Verbrennungsprozess in der Hilfs-Verbrennungszone (69) erzeugten Gase definiert.

8. Brennerbaugruppe nach einem der vorhergehenden Ansprüche, wobei die Strömungsleitvorrichtung (85) ein Ablenkelement (86) zum Ablenken der Luftströmung und ein Förderelement (87) zum Führen des Brennstoffstroms umfasst, wobei das Ablenkelement (86) und das Förderelement (87) so geformt sind, dass sie einen Rezirkulationsbereich (101) der Hilfs-Verbrennungszone (100) definieren.

9. Gasturbinenkraftwerk, umfassend wenigstens eine Brennerbaugruppe (9; 39; 59; 79; 109) nach einem der vorhergehenden Ansprüche.

## Revendications

1. Ensemble de brûleur pour une turbine à gaz, l'ensemble de brûleur (9 ; 39 ; 59 ; 79 ; 109) s'étendant suivant un axe longitudinal (B) et comprenant :
un brûleur principal (10) configuré pour délivrer un mélange air-combustible et pour définir une zone de combustion principale (12) ;
un brûleur auxiliaire (11 ; 41 ; 61 ; 81 ; 111) configuré pour provoquer un processus de combustion sans flamme dans une zone de combustion auxiliaire (19 ; 47 ; 69 ; 100 ; 127) et pour alimenter la zone de combustion principale (12) avec des fumées produites par le processus de combustion sans flamme dans la zone de combustion auxiliaire (19 ; 47 ; 69 ; 100 ; 127) ; dans lequel la zone de combustion auxiliaire (19 ; 47 ; 69 ; 100 ; 127) est agencée en amont de la zone de combustion principale (12) suivant une direction d'alimentation d'air (D1) ;
l'ensemble de brûleur étant **caractérisé en ce que** le brûleur auxiliaire (11 ; 41 ; 61 ; 81 ; 111) comprend un dispositif de guidage d'écoulement (23 ; 45 ; 65 ; 85 ; 115) configuré pour provoquer au moins une zone de recirculation (30, 31 ; 54 ; 70 ; 101 ; 128) des fumées produites par le processus de combustion sans flamme dans la zone de combustion auxiliaire (19 ; 47 ; 69 ; 100 ; 127).

2. Ensemble de brûleur selon la revendication 1, dans lequel le dispositif de guidage d'écoulement (23 ; 45 ; 65 ; 85 ; 115) est muni d'au moins un orifice d'entrée d'air (37 ; 56 ; 74 ; 90 ; 119) et d'au moins un orifice d'entrée de combustible (35, 36 ; 55 ; 71 ; 85 ; 126).

3. Ensemble de brûleur selon l'une quelconque des revendications précédentes, dans lequel le brûleur auxiliaire (11 ; 41 ; 61 ; 81 ; 111) comprend un canal primaire (20 ; 42 ; 62 ; 84 ; 113) pour l'alimentation d'air et un canal d'alimentation de combustible (22 ; 44 ; 64 ; 83 ; 114).

4. Ensemble de brûleur selon la revendication 3, dans lequel le brûleur auxiliaire (11 ; 41 ; 61) comprend un canal secondaire (21 ; 43 ; 63) pour l'alimentation d'air.

5. Ensemble de brûleur selon l'une quelconque des revendications précédentes, dans lequel le dispositif de guidage d'écoulement (23 ; 45) comprend au moins une première cloison (26, 27 ; 49) et une deuxième cloison (27, 28 ; 50), qui s'étendent transversalement à l'axe (B) ; la première cloison (26, 27 ; 49) et la deuxième cloison (27, 28 ; 50) définissant au moins une zone de recirculation (30, 31 ; 54) de la zone de combustion auxiliaire (19 ; 47).

6. Ensemble de brûleur selon l'une quelconque des revendications précédentes, dans lequel le dispositif de guidage d'écoulement (115) comprend au moins une première chicane (117) et une deuxième chicane (118) ayant une section en forme de C ; la première chicane (117) et la deuxième chicane (118) étant agencées l'une par rapport à l'autre de manière à former un chemin d'écoulement comprenant, dans l'ordre, une première section axiale (119), une première section radiale (120), une deuxième section axiale (121), une deuxième section radiale (122) et une troisième section axiale (123) ; le chemin d'écoulement comprenant une zone de recirculation (128) de la zone de combustion auxiliaire (127).

7. Ensemble de brûleur selon l'une quelconque des revendications précédentes, dans lequel le dispositif de guidage d'écoulement (65) comprend un élément en forme de coupe agencé sensiblement suivant l'axe (B), qui définit une zone de recirculation (70) des fumées produites par la combustion dans la zone de combustion principale (12) et des fumées produites par le processus de combustion sans flamme dans la zone de combustion auxiliaire (69).

8. Ensemble de brûleur selon l'une quelconque des revendications précédentes, dans lequel le dispositif de guidage d'écoulement (85) comprend un élément de déviation (86) pour dévier le flux d'air et un élément de transport (87) pour transporter le flux de combustible ; l'élément de déviation (86) et l'élément de transport (87) étant profilés de manière à définir une zone de recirculation (101) de la zone de combustion auxiliaire (100).

9. Centrale électrique à turbine à gaz comprenant au moins un ensemble de brûleur (9 ; 39 ; 59 ; 79 ; 109) selon l'une quelconque des revendications précédentes.
